# EUROPEAN PATENT APPLICATION

(11) **EP 4 525 539 A1**
(43) Date of publication of application: **19.03.2025**
(21) Application number: 23803845.9
(22) Date of filing: 10.05.2023
(51) Int. Cl.: H04W 72/23, H04W 72/04, H04W 72/566, H04L 1/18, H04L 1/00, H04L 5/00

(54) **METHOD AND DEVICE FOR TRANSMITTING AND RECEIVING DATA IN WIRELESS NETWORK**

(30) Priority: 10.05.2022 KR 20220057107; 09.05.2023 KR 20230060059
(71) Applicant: KT Corporation, Seongnam-si, Gyeonggi-do 13606 (KR)
(72) Inventor: PARK, Ki Hyeon, Seongnam-si Gyeonggi-do 13606 (KR)
(74) Representative: Brevalex
(86) International application number: PCT/KR2023/006366
(87) International publication number: WO 2023/219422

(57) **Abstract**

Provided are a method and a device for transmitting and receiving data in a wireless network. The method may include receiving configuration information for periodic transmission of an uplink data channel from a base station; and transmitting the uplink data channel to a base station on the basis of the configuration information, wherein the terminal is a terminal that supports an extended reality service.

## Description

### Technical Field

The present embodiments propose methods and devices for performing data transmission/reception in a radio network in the next-generation radio access network (hereinafter, "new radio (NR)").

### Background Art

Recently, the 3rd generation partnership project (3GPP) has approved the "Study on New Radio Access Technology", which is a study item for research on next-generation/5G radio access technology (hereinafter, referred to as "new radio" or "NR"). On the basis of the Study on New Radio Access Technology, Radio Access Network Working Group 1 (RAN WG1) has been discussing frame structures, channel coding and modulation, waveforms, multiple access methods, and the like for the new radio (NR). It is required to design the NR not only to provide an improved data transmission rate as compared with the long term evolution (LTE)/LTE-Advanced, but also to meet various requirements in detailed and specific usage scenarios.

An enhanced mobile broadband (eMBB), massive machine-type communication (mMTC), and ultra reliable and low latency communication (URLLC) are proposed as representative usage scenarios of the NR. In order to meet the requirements of the individual scenarios, it is required to design the NR to have flexible frame structures, compared with the LTE/LTE-Advanced.

Since the requirements for data rates, latency, reliability, coverage vary, , a method is needed to efficiently multiplex radio resources based on different numerologies (e.g., subcarrier spacing, subframe, and Transmission Time Interval (TTI)). This satisfies requirements of each usage scenario within frequency bands of an NR system.

There is a need for a specific design that can efficiently handle resource allocation and scheduling during data transmission and reception on UEs supporting extended reality (XR) services in a wireless network.

### Detailed Description of the Invention

### Technical Problem

The disclosure may provide a method and device performing data transmission and reception in a wireless network in NR.

### Technical Solution

In an aspect, the disclosure may provide a method for transmitting data by a user equipment (UE). The method may include receiving, from a base station, configuration information about periodic transmission of an uplink data channel, and transmitting, to the base station, the uplink data channel based on the configuration information. The UE supports an extended reality (XR) service.

In another aspect, the present disclosure may provide a method for receiving data by a base station. The method may include transmitting, to a UE, configuration information about periodic transmission of an uplink data channel, and receiving, from the UE, the uplink data channel based on the configuration information. The UE supports an extended reality (XR) service.

In another aspect, the disclosure may provide a UE transmitting data. The UE may include a transmitter, a receiver, and a controller controlling an operation of the transmitter and the receiver, receiving configuration information about periodic transmission of an uplink data channel, and transmitting the uplink data channel based on the configuration information, wherein the UE supports an extended reality (XR) service.

In another aspect, the disclosure may provide a base station receiving data. The base station may include a transmitter, a receiver, and a controller controlling an operation of the transmitter and the receiver, transmitting, to a UE, configuration information about periodic transmission of an uplink data channel, and receiving the uplink data channel based on the configuration information, wherein the UE supports an extended reality (XR) service.

### Advantageous Effects

According to the present embodiments, data may be efficiently transmitted and received in a wireless network in NR.

### Brief Description of the Drawings

FIG. 1 is a view schematically illustrating an NR wireless communication system in accordance with embodiments of the present disclosure;
FIG. 2 is a view schematically illustrating a frame structure in an NR system in accordance with embodiments of the present disclosure;
FIG. 3 is a view for explaining resource grids supported by a radio access technology in accordance with embodiments of the present disclosure;
FIG. 4 is a view for explaining bandwidth parts supported by a radio access technology in accordance with embodiments of the present disclosure;
FIG. 5 is a view illustrating an example of a synchronization signal block in a radio access technology in accordance with embodiments of the present disclosure;
FIG. 6 is a signal diagram for explaining a random access procedure in a radio access technology in accordance with embodiments of the present disclosure;
FIG. 7 is a view for explaining CORESET;
FIG. 8 is a view illustrating an example of symbol level alignment among different subcarrier spacings (SCSs) in accordance with embodiments of the present disclosure;
FIG. 9 is a view schematically illustrating a bandwidth part to which embodiments of the present disclosure may be applied;
FIG. 10 is a flowchart illustrating a method for controlling transmission of an uplink data channel by a UE according to an embodiment;
FIG. 11 is a flowchart illustrating a method for controlling reception of an uplink data channel by a base station according to an embodiment;
FIG. 12 is a block diagram illustrating a UE according to an embodiment; and
FIG. 13 is a block diagram illustrating a base station according to an embodiment.

### Mode for Carrying out the Invention

Hereinafter, some embodiments of the present disclosure will be described in detail with reference to the accompanying illustrative drawings. In the drawings, like reference numerals are used to denote like elements throughout the drawings, even if they are shown on different drawings. Further, in the following description of the present disclosure, a detailed description of known functions and configurations incorporated herein will be omitted when it may make the subject matter of the present disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the present disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports high-speed mobility.

In order to satisfy such scenarios, NR introduces a wireless communication system employing a new waveform and frame structure technology, a low-latency technology, a super-high frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

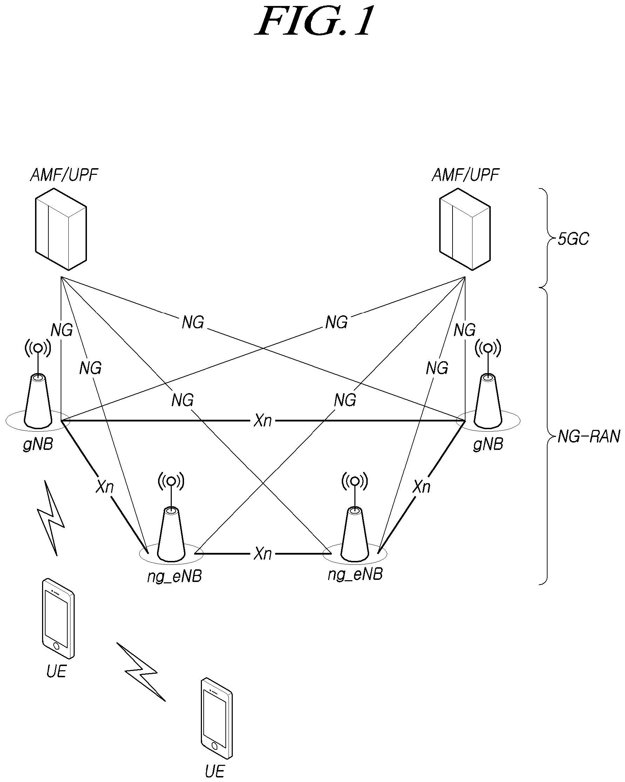

FIG. 1 is a view schematically illustrating an NR system.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

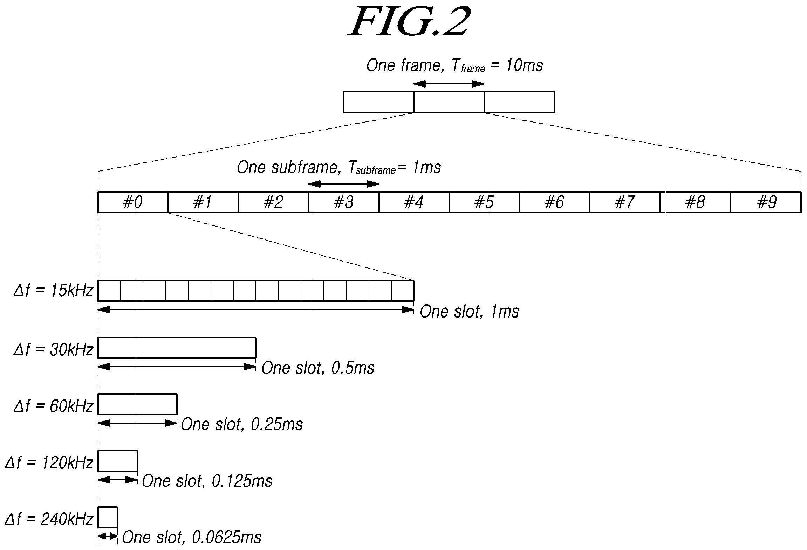

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system. Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

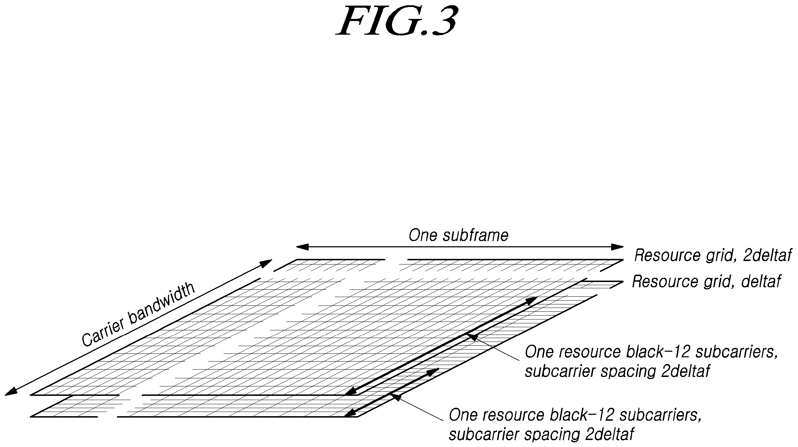

FIG. 3 illustrates resource grids supported by a radio access technology in accordance with embodiments of the present disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

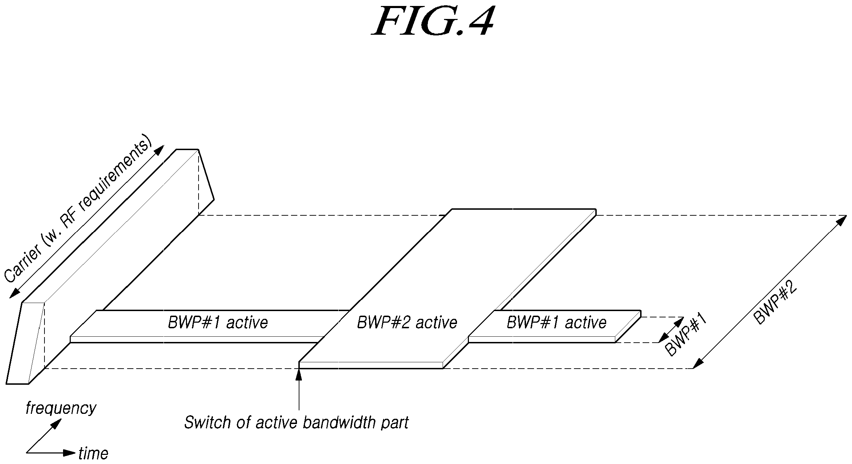

FIG. 4 illustrates bandwidth parts supported by a radio access technology in accordance with embodiments of the present disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

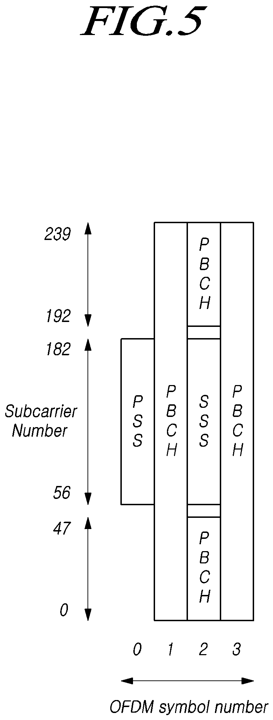

FIG. 5 illustrates an example of a synchronization signal block in a radio access technology in accordance with embodiments of the present disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

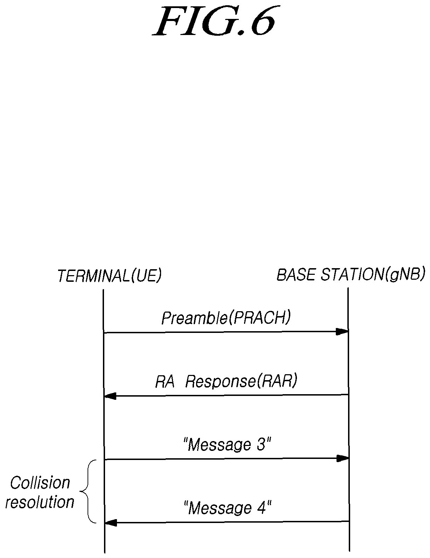

FIG. 6 is a view for explaining a random access procedure in a radio access technology to which the present embodiment is applicable.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

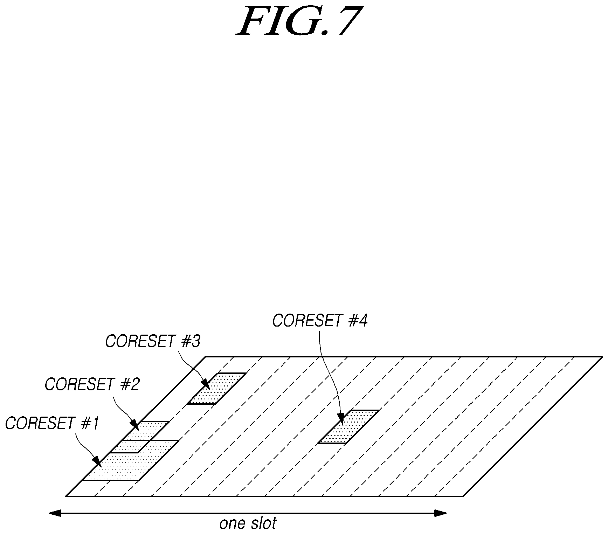

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

### NR (New Radio)

The NR is required to be designed not only to provide an improved data transmission rate but also to meet various QoS requirements for each detailed and specific usage scenario, compared to the LTE/LTE-Advanced. In particular, an enhanced mobile broadband (eMBB), massive machine-type communication (mMTC), and ultra reliable and low latency communication (URLLC) are defined as representative usage scenarios of the NR. In order to meet requirements for each usage scenario, it is required to design the NR to have a more flexible frame structure as compared to the LTE/LTE-Advanced.

Since each usage scenario imposes different requirements for data rates, latency, coverage, etc., there arises a need for a method of efficiently multiplexing numerology-based (e.g., a subcarrier spacing (SCS), a subframe, a transmission time interval (TTI), etc.) radio resource units different from each other, as a solution for efficiently satisfying requirements according to usage scenarios over a frequency band provided to an NR system.

To this end, there have been discussions on i) methods of multiplexing numerologies having subcarrier spacing (SCS) values different from one another based on TDM, FDM or TDM/FDM over one NR carrier, and ii) methods of supporting one or more time units in configuring a scheduling unit in the time domain. In this regard, in the NR, a definition of a subframe has been given as one type of a time domain structure. In addition, as a reference numerology to define a corresponding subframe duration, a single subframe duration is defined as having 14 OFDM symbols of normal CP overhead based on 15 kHz subcarrier spacing (SCS), like the LTE. Therefore, the subframe of the NR has the time duration of 1 ms. Unlike the LTE, since the subframe of the NR is an absolute reference time duration, a slot and a mini-slot may be defined as a time unit for actual UL/DL data scheduling. In this case, the number of OFDM symbols which constitutes a slot, a value of y, has been defined as y = 14 regardless of the numerology.

Therefore, a slot may be made up of 14 symbols. In accordance with a transmission direction for a corresponding slot, all symbols may be used for DL transmission or UL transmission, or the symbols may be used in the configuration of a DL portion + a gap + a UL portion.

Further, a mini-slot has been defined to be made up of fewer symbols than the slot in a numerology (or SCS), and as a result, a short time domain scheduling interval may be configured for UL/DL data transmission or reception based on the mini-slot. Also, a long time domain scheduling interval may be configured for the UL/DL data transmission or reception by slot aggregation.

Particularly, in the case of the transmission or reception of latency critical data, such as the URLLC, when scheduling is performed on a slot basis based on 1 ms (14 symbols) defined in a frame structure based on a numerology having a small SCS value, for example, 15 kHz, latency requirements may be difficult to be satisfied. To this end, a mini-slot made up of fewer OFDM symbols than the slot may be defined, and thus the scheduling for the latency critical data, such as the URLLC, may be performed based on the mini-slot.

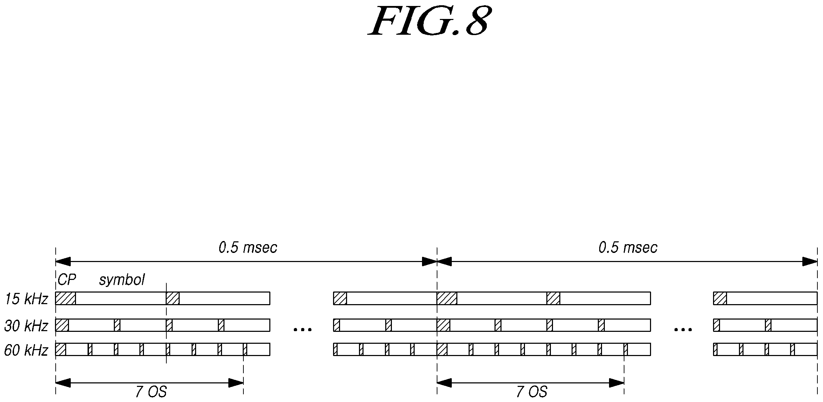

As described above, it is also contemplated to schedule the data according to the latency requirement based on the length of the slot (or minislot) defined by the numerology by supporting the numerology with the different SCS values in one NR carrier by multiplexing them in the TDM and/or FDM manner. For example, as shown in FIG. 8, when the SCS is 60 kHz, the symbol length is reduced to about 1/4 of that of the SCS 15 kHz. Therefore, when one slot is made up of 14 OFDM symbols, the slot length based on 15 kHz is 1 ms whereas the slot length based on 60 kHz is reduced to about 0.25 ms.

Thus, since different SCSs or different TTI lengths from one another are defined in the NR, technologies have been developed for satisfying requirements of each of the URLLC and the eMBB.

### Wider bandwidth operations

The typical LTE system supports scalable bandwidth operations for any LTE CC (component carrier). That is, according to a frequency deployment scenario, an LTE provider may configure a bandwidth of a minimum of 1.4 MHz to a maximum of 20 MHz in configuring a single LTE CC, and a normal LTE UE supports a transmission/reception capability of a bandwidth of 20 MHz for a single LTE CC.

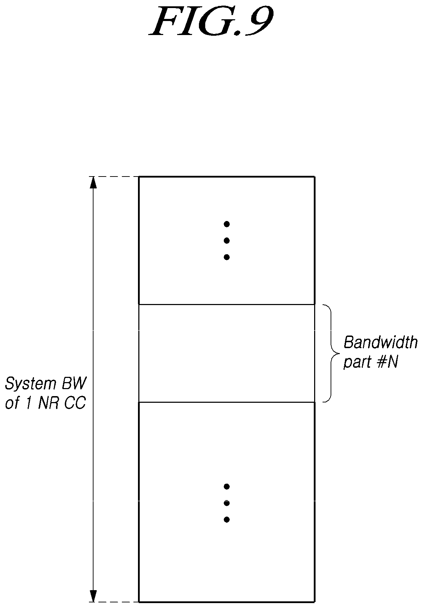

However, the NR is designed to support the UE of NR having different transmission/reception bandwidth capabilities over a single wideband NR CC. Accordingly, it is required to configure one or more bandwidth parts (BWPs) including subdivided bandwidths for an NR CC as shown FIG. 9, thereby supporting a flexible and wider bandwidth operation through configuration and activation of different bandwidth parts for respective UEs.

Specifically, one or more bandwidth parts may be configured through a single serving cell configured for a UE in NR, and the UE is defined to activate one downlink (DL) bandwidth part and one uplink (UL) bandwidth part to use the same for uplink/downlink data transmission/reception in the corresponding serving cell. In addition, in the case where a plurality of serving cells is configured for the UE (i.e., the UE to which CA is applied), the UE is also defined to activate one downlink bandwidth part and/or one uplink bandwidth part in each serving cell to use the same for uplink/downlink data transmission/reception by utilizing radio resources of the corresponding serving cell.

Specifically, an initial bandwidth part for an initial access procedure for a UE may be defined in a serving cell; one or more UE-specific bandwidth parts may be configured for each UE through dedicated RRC signaling, and a default bandwidth part for fallback operations may be defined for each UE.

It is possible to define simultaneously activating and using a plurality of downlink and/or uplink bandwidth parts according to the capability of the UE and the configuration of the bandwidth parts in a serving cell. However, NR rel-15 defined activating and using only one downlink (DL) bandwidth part and one uplink (UL) bandwidth part at a time.

Hereinafter, a method for performing data transmission and reception in a wireless network will be described in detail with reference to the related drawings.

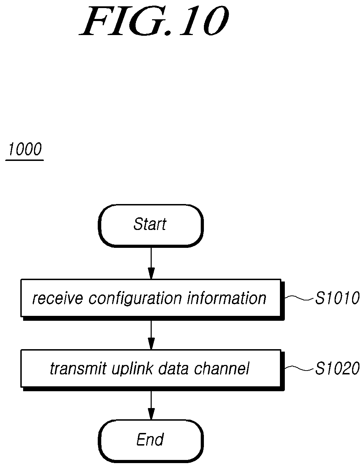

FIG. 10 is a flowchart illustrating a method for controlling transmission of an uplink data channel by a user equipment (UE) according to an embodiment.

Referring to FIG. 10, the UE may receive configuration information about periodic transmission of the uplink data channel from the base station (S1010).

According to an embodiment, the UE may be a UE (extended reality (XR) UE) supporting an XR service. The extended reality (XR) refers to a group of immersive technologies, including virtual reality (VR), augmented reality (AR), and mixed reality (MR). The UE is not limited to a specific device as long as it may provide an XR service in a wireless environment.

Configuration information about periodic transmission of the uplink data channel PUSCH may be received through higher layer signaling. Hereinafter, embodiments will be described based on a type 1 configured grant (CG) in uplink scheduling. However, it is not limited thereto. The embodiments may be applied to type 2 CGs in substantially the same manner unless it contradicts the technical spirit of the disclosure.

According to an embodiment, the configuration information is information on parameters for configuring periodic transmission of the uplink data channel. The configuration information may include a time/frequency resource and period, an MCS configuration value, or the like. The configuration information may be received through RRC signaling. Further, the configuration information may include information about the number of times in which the uplink data channel is transmitted in a predetermined time interval. Here, the predetermined time interval may refer to a time interval in which transmission of an uplink data channel is configured by the configuration information.

According to an embodiment, the plurality of uplink data channels transmitted within the time interval configured as the CG may be configured to have the same start and length indicator value (SLIV) within consecutive slots. In other words, each uplink data channel may be configured to have the same position of the start symbol in the slot and the number of symbols.

Further, according to an embodiment, the number of times the uplink data channel is transmitted in a predetermined time interval may refer a transmission occasion of the uplink data channel. In this case, the UE may report the radio resource not actually used for transmission of the uplink data channel to the base station using the uplink control information (UCI). Here, the uplink control information for reporting the unused transmission okay may need to be newly defined. Alternatively, the information about the unused transmission okay may be included in a new field in the existing CG-UCI, or may be included by changing the use of the existing field.

According to an embodiment, the CG configuration for periodic transmission of the uplink data channel may be dynamically changed through RRC signaling. To that end, in the configuration information, at least one parameter among parameters used for the periodic transmission of the uplink data channel may be configured in plural. In other words, at least one of parameters such as a configured time resource and frequency resource, MCS index, antenna port, hopping configuration, or time offset may be defined as multiple values. Alternatively, at least one of the parameters may be defined in the form of a predetermined range, or a range and a representative value.

In this case, as configured in the configuration information through RRC signaling, the UE may transmit an uplink data channel in the form in which the parameter corresponding to each radio resource is applied. For example, it is assumed that the MCS index is defined as multiple values in the configuration information. According to the configuration information, the UE may transmit the uplink data channel as the first MCS index in the first radio resource. Thereafter, the UE may transmit the uplink data channel by applying the second MCS index configured to correspond to the second radio resource in the second radio resource.

In this case, according to an example, a parameter indicating whether to change the configuration for periodic transmission of the uplink data channel with downlink control information may be further defined. When the corresponding parameter is included in the configuration information, the UE may change the value currently applied to the parameter defined as multiple values to the value indicated by the downlink control information. In this case, according to an example, the downlink control information may be received through a separate search space. Alternatively, the downlink control information may be received through an additional DCI format that may be scrambled with a CS-RNTI or a newly defined RNTI.

For example, it is assumed that the MCS index is defined as multiple values in the configuration information. In this case, the UE may transmit the uplink data channel by applying the first MCS index. Thereafter, when the UE receives the downlink control information instructing a change to the second MCS index, the UE may transmit the uplink data channel by applying the second MCS index. The MCS index has been exemplified above, but the same may naturally apply at least one other parameter.

According to an embodiment, the configuration information may include multiple configured grants (CGs) used for periodic transmission of an uplink data channel. In other words, each of the multiple CGs may be configured to have different parameter value for periodic transmission of an uplink data channel. Accordingly, multiple CGs may be configured to have different parameter values such as a set time resource and frequency resource, MCS index, antenna port, hopping configuration, or time offset. The UE may transmit the uplink data channel by changing the configuration according to one CG which is activated by the downlink control information, among the multiple CGs.

In this case, any one of of the multiple CGs (configured grants) may be activated by the downlink control information. According to an embodiment, for activation, a list of defined multiple CGs may be arranged in ID order. Accordingly, the list of CGs may be represented in the form of a bitmap in the ID order and may be indicated as a value of a predetermined field in the downlink control information. Accordingly, the configuration of each CG may be activated and/or deactivated. Alternatively, as many of them as the number of the defined CGs, CGs may be represented in the form of an integer and the CGs may be activated/deactivated in the form of a number. In this case, according to an embodiment, the downlink control information may be received through a separate search space. Alternatively, the downlink control information may be received through an additional DCI format that may be scrambled with a CS-RNTI or a newly defined RNTI.

Referring back to FIG. 10, the UE may transmit the uplink data channel to the base station based on the configuration information (S1020).

As described above, the UE may transmit an uplink data channel by applying the parameter corresponding to each radio resource, according to the configuration information configured through RRC signaling.

Alternatively, the UE may transmit the uplink data channel by changing the configuration according to one activated by the downlink control information among the multiple CGs.

According to the embodiments described above, resource allocation and scheduling may be performed efficiently by configuring separate configuration information for periodic data transmission/reception of a UE supporting an extended reality service.

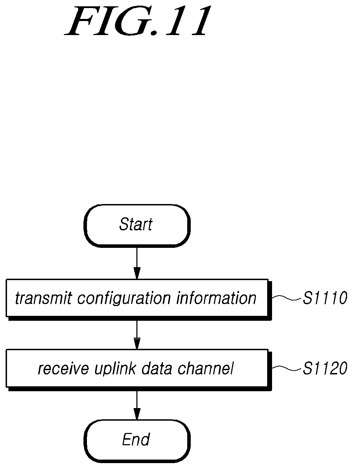

FIG. 11 is a flowchart illustrating a method 1100 for controlling reception of an uplink data channel by a base station according to an embodiment. The description made in connection with FIG. 10 may be omitted to avoid redundant description. The omitted content may be applied substantially the same way to the transmission UE, as long as it does not contradict the technical spirit of the disclosure.

Referring to FIG. 11, the base station may transmit configuration information for the positioning reference signal to the UE (S1100).

The base station may transmit configuration information for periodic transmission of the uplink data channel PUSCH by higher layer signaling.

According to an embodiment, the configuration information is information on parameters for configuring periodic transmission of the uplink data channel. The configuration information may include a time/frequency resource and period, an MCS configuration value, or the like. The configuration information may be received through RRC signaling. In this case, the configuration information may include information about the number of times the uplink data channel is transmitted in a predetermined time interval. Here, the predetermined time interval may refer to a time interval where transmission of an uplink data channel is configured by the configuration information.

According to an embodiment, the CG configuration for periodic transmission of the uplink data channel may be dynamically changed through RRC signaling. To that end, the base station may configure at least one parameter with multiple values, among multiple parameters used for periodic transmission of the uplink data channel included in the configuration information. In other words, at least one parameter, such as a configured time resource and frequency resource, MCS index, antenna port, hopping configuration, or time offset, may be defined with multiple values. Alternatively, at least one parameter may be defined in the form of a predetermined range, or as a range and a representative value.

In this case, as configured in the configuration information through RRC signaling, the base station may receive an uplink data channel from the UE in the form where the parameter corresponding to each radio resource is applied. For example, it is assumed that the MCS index is defined with multiple values in the configuration information. According to the configuration information, the base station may receive an uplink data channel from the first radio resource to the first MCS index. Thereafter, the base station may receive the uplink data channel by applying the second MCS index configured to correspond to the second radio resource.

In this case, according to an embodiment, a parameter indicating whether to change the configuration for periodic transmission of the uplink data channel with downlink control information may be further defined. When the corresponding parameter is additionally included in the configuration information, the base station may instruct a change in the value currently applied to the parameter defined with multiple values to another value by the downlink control information. In this case, according to an embodiment, the downlink control information may be received through a separate search space. Alternatively, the downlink control information may be received through an additional DCI format that may be scrambled with a CS-RNTI or a newly defined RNTI.

For example, it is assumed that the MCS index is defined with multiple values in the configuration information. In this case, the base station may receive the uplink data channel by applying the first MCS index. Thereafter, when the base station transmits the downlink control information instructing a change to the second MCS index, it may receive the uplink data channel by applying the second MCS index. The MCS index has been exemplified above, but the same may naturally apply to at least one other parameter.

According to an embodiment, the configuration information may include multiple configured grants (CGs) used for periodic transmission of an uplink data channel. In other words, each of multiple CGs may be configured to have different parameter value for periodic transmission of an uplink data channel. Accordingly, the multiple CGs may be configured to have different parameter values, such as a set time resource and frequency resource, MCS index, antenna port, hopping configuration, or time offset. The base station may receive the uplink data channel by changing the configuration according to one CG, which is activated by the downlink control information, among the multiple CGs.

In this case, any one of multiple CGs (configured grants) may be activated by the downlink control information. According to an embodiment, for activation, a list of defined multiple CGs may be arranged in ID order. Accordingly, the list of CGs may be represented in the form of a bitmap in the ID order and may be indicated as a value of a predetermined field in the downlink control information. Therefore, the configuration of each CG may be activated and/or deactivated. Alternatively, as many of them as the number of the defined CGs, CGs may be represented in the form of an integer. The CGs may be activated/deactivated in the form of a number. In this case, according to an embodiment, the downlink control information may be received through a separate search space. Alternatively, the downlink control information may be received through an additional DCI format that may be scrambled with a CS-RNTI or a newly defined RNTI.

Referring back to FIG. 11, the base station may receive the uplink data channel from the UE based on the configuration information (S1120).

As described above, the base station may receive an uplink data channel in the form where the parameter corresponding to each radio resource is applied, as configured in the configuration information through RRC signaling.

Alternatively, the base station may receive the uplink data channel by changing the configuration according to the CG activated by the downlink control information among the multiple CGs.

Accordingly, resource allocation and scheduling may be performed more efficiently by configuring separate configuration information for periodic data transmission/reception of a UE supporting an extended reality service.

Hereinafter, more embodiments of the method for performing data transmission/reception in a wireless network will be described in detail with reference to related drawings.

In NR, semi-persistent scheduling (SPS) is used for downlink and a configured grant (CG) is used for uplink to schedule periodic traffic. Specifically, in the case of downlink, a period is configured through a radio resource control (RRC) message called SPS-Config, and then activation/deactivation instruction and resource configuration are performed through downlink control information (DCI) scrambled with a configured scheduling RNTI (CS-RNTI). In the case of uplink, it is divided into type 1 and type 2. For type 1, all of the time/frequency resource, periods, MCS configuration value, etc. are configured and transmitted through RRC. For type 2, based on the period configured through RRC, actual transmission is instructed with the time/frequency resource and MCS configuration value through DCI scrambled with CS-RNTI. In this case, an RRC message called configuredgrantconfig is used for configuration. When a message called frc-ConfiguredUplinkGrant, including the resource and MCS value indication, is defined in the corresponding message, it is configured as type-1 and, when it is not defined, it is set as type-2.

The following items are being considered or planned to enhance the standards for the XR UE.

Objectives on XR-awareness in RAN (RAN2):
- Study and identify the XR traffic (both UL and DL) characteristics, QoS metrics, and application layer attributes beneficial for the gNB to be aware of.
- Study how the above information aids XR-specific traffic handling.

Objectives on XR-specific Power Saving (RAN1, RAN2):
- Study XR specific power saving techniques to accommodate XR service characteristics (periodicity, multiple flows, jitter, latency, reliability, etc.

∘C-DRX enhancement.
∘PDCCH monitoring enhancement.

Objectives on XR-specific capacity improvements (RAN1, RAN2):
-Study mechanisms that provide more efficient resource allocation and scheduling for XR service characteristics (periodicity, multiple flows, jitter, latency, reliability, etc.

∘ SPS and CG enhancements.
∘ Dynamic scheduling/grant enhancements.

In the above-described items, power saving and capacitance enhancement are being pursued in XR. To that end, enhancement of transmission channels, in particular, SPS for a downlink periodic transmission, and CG for an uplink periodic transmission are being promoted.

Typical periodic transmission aims to reduce the overhead of the UE by configuration period and other setting values through RRC. This is very advantageous in reducing power of the UE by reducing reception complexity, but it may not be suitable for systems requiring low latency. For example, when the period of the SPS is short, the UE's delay characteristic may be improved, but the resource management complexity may increase. Conversely, when the period is long, in the case of XR, the frequency of additional resource allocation for fast packets is high, which may lead to increased overhead. Since the required latency is estimated to be between 10 ms and 20 ms and the required packet interval may vary from time to time depending on the service, it is impossible to perform configuration suitable for traffic characteristics only by RRC configuration.

The disclosure provides a method for configuring periodic transmission in an NR transmission/reception environment. In particular, it provides a method for dynamically changing configuration in a downlink and a method for dynamically changing configuration in an uplink.

Hereinafter, (1) an SPS transmission method supporting dynamic configuration change and (2) a CG transmission method supporting dynamic configuration change will be described.

### (1) SPS transmission method supporting dynamic configuration change

According to the embodiment, this method may dynamically change a setting value in configuration for an SPS that is a downlink periodic transmission. This method may be largely divided into an RRC pre-configuration method and a configuration change instruction method in DCI.

### ① RRC configuration method for SPS dynamic configuration change

This method configures RRC to dynamically change the SPS configuration. To that end, periods, HARQ-related parameters, or repeated transmission parameters may be defined as multiple values, may be defined in the form of a range, or may be defined in the form of a range and a representative value. Further, an RRC parameter indicating whether to change the configuration through DCI may be further defined.

### ② SPS configuration change instruction method in DCI

This method changes the current SPS configuration using DCI. This method may be largely divided into an activation/deactivation method, a period change method, an HARQ change method, and a repeated transmission configuration change method.

First, as the activation/deactivation method, the list of the multiple SPSs may be arranged in an ID order or the like, and then expressed in a bitmap form based thereon, so that each SPS configuration may be activated/deactivated. Alternatively, the number of defined SPS may be expressed in integer form, and the SPS configuration may be activated/deactivated numerically. For example, when eight SPSs are configured, the kth (or k-1th) SPSs from 0 to 8 may be activated, and the k+1th (or kth) SPSs may be deactivated, or vice versa. Alternatively, the configuration of only the kth SPS may be changed through the integer k from 1 to 8 and one bit.

For the period, the index of the configuration group previously configured through RRC may be indicated, or it may be indicated in the form of the previous period or the subsequent period value. The configurable period may be selected as one of 10, 20, 40, 64, 80, 128, 160, 320, or 640ms except when additionally, reconfigured (Rel. 16). For example, when 80 ms is configured as the period by RRC, it may be configured as 64/128 with 1 bit, or 40/64/128/160 with 2 bits. Alternatively, in additional cases, it may be configured as half/double with 1 bit, or 1/3, 1/2, 2, or 3 times with 2 bits. The configuration may be performed with respect to a pre-RRC configuration period or may also be performed with respect to the last changed configuration period. In this case, when multiple SPSs are configured, the SPS whose configuration is to be changed may be transferred as the index.

For HARQ, the ID may be changed in the same way as the period, or whether to perform feedback transmission may be determined.

Even in the case of repeated transmission, the transmission value may be changed in the same way as the period.

An additional DCI format may be defined to instruct changing the SPS configuration. In this case, the DCI may be sent through a separate search space and may be scrambled with the CS-RNTI or a newly defined RNTI.

### (2) CG transmission method supporting dynamic configuration change

This method may dynamically change a setting value in configuration for an CG that is an uplink periodic transmission. This method may be largely divided into an RRC pre-configuration method and a configuration change instruction method in DCI. Each method may include type 1 performing an additional configuration for radio resources as additional method.

### ① RRC configuration method for CG dynamic configuration change

This method configures RRC to dynamically change the CG configuration. To that end, periods or repeated transmission parameters, defined in ConfiguredGrantConfig, may be defined with multiple values, may be defined in the form of a range, or may be defined in the form of a range and a representative value. In particular, for type 1, parameters, such as the set time and frequency resource, MCS index, antenna port, hopping configuration, or time offset may be defined with multiple values, or may be defined in the form of a range, or may be defined the form of a range and a representative value. Further, an RRC parameter indicating whether to change the configuration through DCI may be further defined.

### ② CG configuration change instruction method in DCI

This method changes the current SPS configuration using DCI. First, like the SPS, activation/deactivation of each of a plurality of configured CGs may be indicated. Further, the periodic or repeated transmission configuration may be changed.

First, as the activation/deactivation method, the list of multiple SPSs defined may be arranged in an ID order, and then expressed in a bitmap form based that, so that each CG configuration may be activated/deactivated. Alternatively, as many CGs as the number of the defined CGs may be represented in the form of an integer and be activated/deactivated in the form of a number.

For the period or repeated transmission, like the above-described SPS, the index of the configuration group previously configured through RRC may be indicated, or it may be indicated in the form of the previous period or the subsequent period value. The configuration may be performed with respect to a pre-RRC setting value or may also be performed with respect to the last changed setting value. In the case of period, only the change in the CP setting value may only be transferred. In this case, when there is no corresponding value such as sym5120x14, the period may be changed to the closest value or a specific value, e.g., sym2560x12 due to the corresponding indication.

Further, the frequency hopping pattern may be changed, and in particular, whether to perform hopping may be changed through 1 bit. In the above-described configuration, when multiple CGs are configured, the CG whose configuration is to be changed may be transferred as the index.

An additional DCI format may be defined to instruct changing the configuration. The DCI may be sent through a separate search space and may be scrambled with the CS-RNTI or a newly defined RNTI.

In the case of type 1, MCS and time/frequency definitions may be changed in addition to or separately from the previously described configuration. To that end, the PDSCH scrambled with the CS-RNTI as in type 2 may be transmitted in a preconfigured space to change the configuration of type 1 in order to transmit the corresponding information. Alternatively, it may be sent through a separate search space and may be changed through an additional DCI format that may be scrambled with the CS-RNTI or a newly defined RNTI. The DCI may be selected from preconfigured candidate spaces for time/frequency resources. Alternatively, in the case of time resources, the DCI may instruct frequency-wise use the space of n/k in the space configured through RRC in the case of frequency resources, and a new value of the time domain resource allocation (TDRA) in the case of time resources. For example, it may be configured like {1, 1/2, 1/3, 1/4, 1/5, 2/3, 3/4, 4/5} through three bits so that the frequency domain may be changed based on the area indicated in the existing RRC. In this case, it may be additionally indicated that the start PRB is changed, the end PRB is changed, or which one of the two is to be changed for resource configuration in the corresponding ratio.

Further, the MCS setting value may be changed and, to that end, it may be selected from preconfigured candidate values, or an instruction may be made to move it by a specific value in the uplink/downlink direction. In this case, the corresponding specific value may be specified in the standard or additionally indicated through RRC.

The methods of the disclosure may be applied independently or in any type of combination. Further, among the terms used herein, novel terms are chosen arbitrarily for ease of understanding, and the invention of the disclosure is applicable even where other terms with the same meaning are used.

Through the method provided in the disclosure, it is possible to perform resource-efficient periodic uplink/downlink transmission matching the traffic characteristics of an XR UE.

Accordingly, resource allocation and scheduling may be performed more efficiently by configuring separate configuration information for periodic data transmission/reception of a UE supporting an extended reality service.

Hereinafter, configurations of a UE and a base station, which may perform all or some of the embodiments described above in connection with FIGS. 1 to 11, will be described with reference to the drawings. The above-described description may be omitted to avoid redundancy, and the omitted content may be applied in substantially the same manner to the following description as long as it does not contradict the technical spirit of the disclosure.

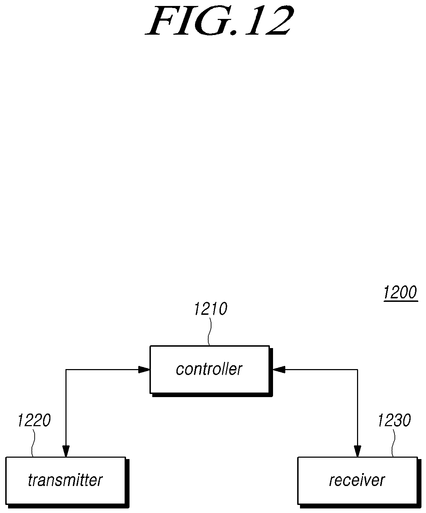

FIG. 12 is a block diagram illustrating a UE 1200 according to an embodiment.

Referring to FIG. 12, a UE 1200 according to an embodiment includes a transmitter 1220, a receiver 1230, and a controller 1210 controlling operations of the transmitter and the receiver.

The controller 1210 may receive configuration information about periodic transmission of the uplink data channel from the base station. Configuration information about periodic transmission of the uplink data channel PUSCH may be received by higher layer signaling.

According to an embodiment, the configuration information is information on parameters for configuring periodic transmission of the uplink data channel. The configuration information may include a time/frequency resource and period, an MCS configuration value, or the like, as parameters. The configuration information may be received through RRC signaling. In this case, the configuration information may include information about the number of times the uplink data channel is transmitted in a predetermined time interval. Here, the predetermined time interval may refer to a time interval in which transmission of an uplink data channel is configured by the configuration information.

According to an embodiment, the CG configuration for periodic transmission of the uplink data channel may be dynamically changed through RRC signaling. To that end, in the configuration information, at least one parameter among parameters used for the periodic transmission of the uplink data channel may be configured in plural. In other words, at least one of parameters such as a configured time resource and frequency resource, MCS index, antenna port, hopping configuration, or time offset may be defined as multiple values. Alternatively, at least one of the parameters may be defined in the form of a predetermined range, or a range and a representative value.

In this case, as configured in the configuration information through RRC signaling, the controller 1210 may transmit an uplink data channel in the form in which the parameter corresponding to each radio resource is applied. For example, it is assumed that the MCS index is defined as multiple values in the configuration information. According to the configuration information, the controller 1210 may transmit the uplink data channel as the first MCS index in the first radio resource. Thereafter, the controller 1210 may transmit the uplink data channel by applying the second MCS index configured to correspond to the second radio resource in the second radio resource.

In this case, according to an example, a parameter indicating whether to change the configuration for periodic transmission of the uplink data channel with downlink control information may be further defined. When the corresponding parameter is included in the configuration information, the controller 1210 may change the value currently applied to the parameter defined as multiple values to the value indicated by the downlink control information. In this case, according to an example, the downlink control information may be received through a separate search space. Alternatively, the downlink control information may be received through an additional DCI format that may be scrambled to a CS-RNTI or a newly defined RNTI.

For example, it is assumed that the MCS index is defined as multiple values in the configuration information. In this case, the controller 1210 may transmit the uplink data channel by applying the first MCS index. Thereafter, when receiving the downlink control information instructing changing to the second MCS index, the controller 1210 may transmit the uplink data channel by applying the second MCS index. The MCS index has been exemplified above, but the same may naturally apply at least one other parameter.

According to an embodiment, the configuration information may include multiple configured grants (CGs) used for periodic transmission of an uplink data channel. In other words, each of the multiple CGs may be configured to have different parameter value for periodic transmission of an uplink data channel. Accordingly, multiple CGs may be configured to have different parameter values such as a set time resource and frequency resource, MCS index, antenna port, hopping configuration, or time offset. The controller 1210 may transmit the uplink data channel by changing the configuration according to one CG which is activated by the downlink control information among the multiple CGs.

In this case, any one of the multiple CGs (configured grants) may be activate d by the downlink control information. According to an embodiment, for activation, a list of defined multiple CGs may be arranged in ID order. Accordingly, the list of CGs may be represented in the form of a bitmap in the ID order and may be indicated as a value of a predetermined field in the downlink control information. Accordingly, the configuration of each CG may be activated and /or deactivated. Alternatively, as many of them as the number of the defined CGs, CGs may be represented in the form of an integer, and the CGs may be activated/deactivated in the form of a number. In this case, according to an embodiment, the downlink control information may be received through a separate search space. Alternatively, the downlink control information may be received through an additional DCI format that may be scrambled to a CS-RNTI or a newly defined RNTI.

The controller 1210 may transmit an uplink data channel based on configuration information to the base station. As described above, the controller 1210 may transmit an uplink data channel in the form where the parameter corresponding to each radio resource is applied, as configured in the configuration information through RRC signaling.

Or, the controller 1210 may transmit the uplink data channel by changing the configuration according to one CG activated by the downlink control information, among the plurality of CGs.

Accordingly, resource allocation and scheduling may be efficiently performed by configuring separate configuration information for periodic data transmission/reception of a UE supporting an extended reality service.

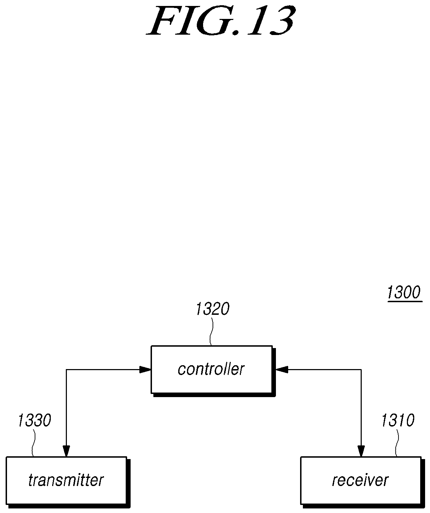

FIG. 13 is a block diagram illustrating a base station 1300 according to an embodiment.

Referring to FIG. 13, a base station 1300 according to another embodiment includes a transmitter 1320, a receiver 1330, and a controller 1310 controlling operations of the transmitter and the receiver.

The controller 1310 may transmit configuration information for the positioning reference signal to the UE.

The controller 1310 may transmit configuration information for periodic transmission of the uplink data channel PUSCH by higher layer signaling.

According to an embodiment, the configuration information is information on parameters for configuring periodic transmission of the uplink data channel. The configuration information may include a time/frequency resource and period, an MCS configuration value, or the like, as the parameters. The configuration information may be received through RRC signaling. In this case, the configuration information may include information about the number of times the uplink data channel is transmitted in a predetermined time interval. Here, the predetermined time interval may refer to a time interval in which transmission of an uplink data channel is configured by the configuration information.

According to an embodiment, the CG configuration for periodic transmission of the uplink data channel may be dynamically changed through RRC signaling. To that end, the controller 1310 may configure at least one parameter with multiple values, among multiple parameters used for periodic transmission of the uplink data channel included in the configuration information. In other words, at least one parameter, such as a configured time resource and frequency resource, MCS index, antenna port, hopping configuration, or time offset, may be defined with multiple values. Alternatively, at least one parameter may be defined in the form of a predetermined range, or in the form of a range and a representative value.

In this case, as configured in the configuration information through RRC signaling, the controller 1310 may receive an uplink data channel from the UE in the form where the parameter corresponding to each radio resource is applied. For example, it is assumed that the MCS index is defined with multiple values in the configuration information. According to the configuration information, the controller 1310 may receive an uplink data channel from the first radio resource to the first MCS index. Thereafter, the controller 1310 may receive the uplink data channel by applying the second MCS index configured to correspond to the second radio resource.

In this case, according to an embodiment, a parameter indicating whether to change the configuration for periodic transmission of the uplink data channel with downlink control information may be further defined. When the corresponding parameter is additionally included in the configuration information, the controller 1310 may instruct a change in the value currently applied to the parameter defined with multiple values to another value by the downlink control information. In this case, according to an embodiment, the downlink control information may be received through a separate search space. Alternatively, the downlink control information may be received through an additional DCI format that may be scrambled to a CS-RNTI or a newly defined RNTI.

For example, it is assumed that the MCS index is defined with multiple values in the configuration information. In this case, the controller 1310 may receive the uplink data channel by applying the first MCS index. Thereafter, when transmitting the downlink control information instructing a change in the second MCS index, the controller 1310 may receive the uplink data channel by applying the second MCS index. The MCS index has been exemplified above, but the same may naturally apply to at least one other parameter.

According to an embodiment, the configuration information may include multiple configured grants (CGs) used for periodic transmission of an uplink data channel. In other words, each of multiple CGs may be configured to have different parameter values for periodic transmission of an uplink data channel. Accordingly, of the multiple CGs may be configured to have different parameter values, such as a set time resource and frequency resource, MCS index, antenna port, hopping configuration, or time offset. The controller 1310 may receive the uplink data channel by changing the configuration according to one CG, which is activated by the downlink control information, among the multiple CGs.

In this case, any one of the multiple CGs (configured grants) may be activated by the downlink control information. According to an embodiment, for activation, a list of defined multiple CGs may be arranged in ID order. Accordingly, the list of CGs may be represented in the form of a bitmap in the ID order and may be indicated as a value of a predetermined field in the downlink control information. Therefore, the configuration of each CG may be activated and/or deactivated. Alternatively, as many of them as the number of the defined CGs, CGs may be represented in the form of an integer. The CGs may be activated/deactivated in the form of a number. In this case, according to an embodiment, the downlink control information may be received through a separate search space. Alternatively, the downlink control information may be received through an additional DCI format that may be scrambled to a CS-RNTI or a newly defined RNTI.

The controller 1310 may receive, from the UE, an uplink data channel based on configuration information. As described above, the controller 1310 may receive an uplink data channel in the form where the parameter corresponding to each radio resource is applied, as configured in the configuration information through RRC signaling.

Or, the controller 1310 may receive the uplink data channel by changing the configuration according to the CG activated by the downlink control information among the multiple CGs.

Accordingly, resource allocation and scheduling may be performed more efficiently by configuring separate configuration information for periodic data transmission/reception of a UE supporting an extended reality service.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the present disclosure have been described only for illustrative purposes, and those skilled in the art will appreciate that various modifications and changes may be made thereto without departing from the scope and spirit of the disclosure. Further, the embodiments of the disclosure are not intended to limit but are intended to illustrate the technical idea of the disclosure, and therefore the scope of the technical idea of the disclosure is not limited by these embodiments. The scope of the present disclosure shall be construed on the basis of the accompanying claims in such a manner that all of the technical ideas included within the scope equivalent to the claims belong to the present disclosure.

### CROSS-REFERENCE TO RELATED APPLICATION

This application claims priority to Korean Patent Application No. 10-2022-0057107, filed on May 10, 2022, and 10-2023-0060059, filed on May 9, 2023, in the Korean Intellectual Property Office, the disclosures of which are incorporated by reference herein in their entireties.

## Claims

1. A method for transmitting data by a user equipment (UE), the method comprising:
receiving, from a base station, configuration information about periodic transmission of an uplink data channel; and
transmitting, to the base station, the uplink data channel based on the configuration information,
wherein the UE supports an extended reality (XR) service.

2. The method of claim 1, wherein the configuration information is received by higher layer signaling and includes information about a number of times in which the uplink data channel is transmitted in a predetermined time interval.

3. The method of claim 2, wherein in the configuration information, at least one parameter among parameters used for the periodic transmission of the uplink data channel is configured in plurality.

4. The method of claim 1, wherein the configuration information includes a plurality of configured grants (CGs) used for the periodic transmission of the uplink data channel.

5. The method of claim 4, wherein in the plurality of configured grants, any one configured grant among the plurality of configured grants is activated by downlink control information.

6. A method for receiving data by a base station, the method comprising:
transmitting, to a UE, configuration information about periodic transmission of an uplink data channel; and
receiving, from the UE, the uplink data channel based on the configuration information,
wherein the UE supports an extended reality (XR) service.

7. The method of claim 6, wherein the configuration information is transmitted by higher layer signaling and includes information about a number of times in which the uplink data channel is transmitted in a predetermined time interval.

8. The method of claim 7, wherein in the configuration information, at least one parameter among parameters used for the periodic transmission of the uplink data channel is configured in plurality.

9. The method of claim 6, wherein the configuration information includes a plurality of configured grants (CGs) used for the periodic transmission of the uplink data channel.

10. The method of claim 9, wherein in the plurality of configured grants, any one configured grant among the plurality of configured grants is activated by downlink control information.

11. A UE transmitting data, comprising:
a transmitter;
a receiver; and
a controller configured to control an operation of the transmitter and the receiver, receive configuration information about periodic transmission of an uplink data channel, and transmit the uplink data channel based on the configuration information,
wherein the UE supports an extended reality (XR) service.

12. The UE of claim 11, wherein the configuration information is received by higher layer signaling and includes information about a number of times in which the uplink data channel is transmitted in a predetermined time interval.

13. The UE of claim 12, wherein in the configuration information, at least one parameter among parameters used for the periodic transmission of the uplink data channel is configured in plurality.

14. The UE of claim 11, wherein the configuration information includes a plurality of configured grants (CGs) used for the periodic transmission of the uplink data channel.

15. The UE of claim 14, wherein in the plurality of configured grants, any one configured grant among the plurality of configured grants is activated by downlink control information.
